# EUROPÄISCHE PATENTSCHRIFT

(11) **EP 0 883 526 B1**
(45) Veröffentlichungstag und Bekanntmachung des Hinweises auf die Patenterteilung: **09.01.2002**
(21) Anmeldenummer: 97914155.3
(22) Anmeldetag: 17.02.1997
(51) Int. Cl.: B60R 21/32, B60R 22/46

(54) **VERFAHREN ZUM AUSLÖSEN EINES RÜCKHALTEMITTELS IN EINEM FAHRZEUG**
METHOD FOR TRIGGERING A RESTRAINING MEANS IN A VEHICLE
PROCEDE DE DECLENCHEMENT D'UN DISPOSITIF DE RETENUE DE SECURITE DANS UN VEHICULE

(30) Priorität: 08.03.1996 DE 19609076
(43) Veröffentlichungstag der Anmeldung: 16.12.1998
(73) Patentinhaber: SIEMENS AKTIENGESELLSCHAFT, 80333 München (DE)
(72) Erfinder: ANTHOFER, Anton, D-92271 Freihung (DE); WÄCHTER, Michael, D-93059 Regensburg (DE); SWART, Marten, D-93083 Obertraubling (DE)
(86) Internationale Anmeldenummer: DE9700297
(87) Internationale Veröffentlichungsnummer: WO9732755

(56) Entgegenhaltungen:
- EP-A- 0 471 871
- EP-A- 0 747 272
- WO-A-97/21565
- WO-A-97/28992
- WHITE C ET AL: "INFLATABLE RESTRAINT SENSING AND DIAGNOSTIC STRATEGY" VERHICLE ELCTRONICS IN THE 90'S, DEARBORN, OCT. 15 - 17, 1990, Nr. -, 1.Oktober 1990, INSTITUTE OF ELECTRICAL AND ELECTRONICS ENGINEERS, Seiten 1-11, XP000223532
- Koch, G., Rembold, U.: "Einführung in die Informatik - Teil 1. Grundlagen und Technik der Datenverarbeitung"; Carl Hanser Verlag, München (DE), Wien (AU), 1977, Seiten 196-198
- Koch, G., Rembold, U.: "Einführung in die Informatik - Teil 2. Programmsysteme, Anwendungen und technologische Perspektiven"; Carl Hanser Verlag, München (DE), Wien (AU), 1980, Seite 302

## Beschreibung

Die Erfindung betrifft ein Verfahren zum Auslösen eines Rückhaltemittels in einem Fahrzeug.

Die WO 97/21 565 A1, deren eine Priorität früher als die Priorität der Patentanmeldung zur vorliegenden Druckschrift liegt und die somit einen Stand der Technik nach Artikel 54 (3) und (4) EPÜ bildet, umfaßt im wesentlichen aus dem Inhalt des früheren Prioritätsdokument, eine Daten - und Energie übertragung über eine 2-Draht-Leitung zwischen einer zentralen Auswerte-, Diagnose- und Stenereinheit und daran über 2-Draht-Leitungen angeschlossenen Zündvorrichtungen für Luftsäcke eines Airbag Systems; einer Gleich-spannung zur Versorgung der Zündvorrichtungen wird zur Daten übertragung eine aus dem zu sendenden Daten strom abgeleitete Wechsel spannung additiv überlagert. Der zur Daten übertragung benutzte Wechsel-spannungsanteil wird in jeder Zündvorrichtung über einen Hochpaß oder Bandpaß ausgekoppelt und steht nach Dekodierung als weiterverarbeitbarer Daten strom zur Verfügung. Steuer einheit und Zündvorrichtungen weisen eine Struktur auf, die mit derjenigen der vorliegen den Druckschrift vergleichbar ist. Zur WO 97/21 565 A1 korrespondiert die EP 0 866 756 A1.

Aus der EP 0 471 871 B1 ist eine Anordnung zum Auslösen eines Rückhaltemittels in einem Fahrzeug bekannt. Diese Anordnung enthält eine zentral im Fahrzeug angeordnete Auswerteeinrichtung, in der ein von einer Sensoreinrichtung geliefertes Aufprallsignal ausgewertet wird. Die Anordnung weist weiterhin über das Fahrzeug verteilte Zündeinrichtungen auf, die über eine oder mehrere Leitungen mit der Auswerteeinrichtung verbunden sind. Die Auswerteeinrichtung liefert codierte Signale an die Zündeinrichtungen. Jede Zündeinrichtung ist mit einem Zündelement eines Rückhaltemittels (Airbag, Gurtstraffer) elektrisch verbunden. Abhängig von den von der Auswerteeinrichtung gelieferten Signalen wird das einer Zündeinrichtung zugeordnete Zündelement mit Energie aus einem Zündkondensator der Zündeinrichtung beaufschlagt und so das zugeordnete Rückhaltemittel ausgelöst.

Ein von der Auswerteeinrichtung an die Zündeinrichtung übermitteltes codiertes Signal kann nicht nur einen Auslösebefehl zum Zünden des Zündelements enthalten: Ein solches Signal kann gleichsam eine sonstige Aufforderung an die Zündeinrichtung oder eine Information z.B. über den elektrischen Zustand der Auswerteschaltung enthalten. Ein von der Zündeinrichtung an die Auswerteeinrichtung übermitteltes codiertes Signal kann gleichsam eine Information über den elektrischen Zustand der Zündeinrichtung enthalten, beispielsweise über die über ein steuerbares Schaltmittel an dem Zündelement anliegende Zündspannung oder der Zündelementwiderstand selbst.

Jedes codierte Signal, das zwischen Auswerteeinrichtung und Zündeinrichtung in Hin- oder in Rückrichtung übertragen wird, wird im folgenden Informationssignal benannt. Allein ein Auslösesignal, das von der Auswerteeinrichtung an die Zündeinrichtung zum Zünden des Zündelements übermittelt wird, ist von der Menge der Informationssignale ausgenommen.

Da die Anordnung während ihres ordnungsgemäßen Betriebs fortwährend auf Funktionstüchtigkeit überprüft wird, kann das Medium zur Nachrichtenübermittlung zwischen der Auswerteeinrichtung und der Zündeinrichtung - üblicherweise eine elektrische Leitung, insbesondere eine Zweidrahtleitung, ein Bus, der mehrere Zündeinrichtungen mit der Auswerteeinrichtung verbindet, ein Lichtleiter aber auch ein Medium zur drahtlosen Datenübertragung - mit einem hohen Datendurchsatz belastet sein, insbesondere wenn mehrere Zündeinrichtungen mit der Auswerteeinrichtung Daten austauschen.

Erkennt die Auswerteeinrichtung anhand des von der Sensoreinrichtung gelieferten Aufprallsignals die Notwendigkeit zum Auslösen eines oder mehrerer Rückhaltemittel, wird ein Auslösesignal an die betreffende Zündeinrichtung geliefert. Wird zur Zeit des Auslösewunsches das Übertragungsmedium in Folge eines hohen Durchsatzes von Informationssignalen blockiert, besteht die Gefahr, daß ein von der Auswerteeinrichtung erzeugtes Auslösesignal nicht rechtzeitig an die betreffende Zündeinrichtung übermittelt werden kann. Dabei spielt die Übertragungszeit zwischen Auswerteeinrichtung und Zündeinrichtung eine umso größere Rolle, je kürzer die ab Aufprall beginnende Zeitspanne ist, innerhalb der das Rückhaltemittel ausgelöst werden muß. Bei der Auslösung eines Seitenairbags beispielsweise beträgt diese Zeitspanne etwa 5 mSek. Deshalb ist insbesondere bei derart zeitkritischen Anwendungsfällen darauf zu achten, daß das Auslösesignal nach seiner Erzeugung in der Auswerteschaltung ohne Verzögerung auf das Medium abgesetzt und an die Zündeinrichtung übertragen werden kann. Eine verzögerte Auslösesignalübertragung zwischen Auswerteeinrichtung und Zündeinrichtung führt zu einem verspäteten Auslösen des Rückhaltemittels und ggf. zu Verletzungen des Insassen.

Aufgabe der Erfindung ist es deshalb, die Nachteile der bekannten Anordnung zu vermeiden, und insbesondere eine Verfahren zur Datenübertragung zwischen Auswerteeinrichtung und Zündeinrichtung zu schaffen, das eine rechtzeitige Übermittlung eines Auslösesignals von der Auswerteeinrichtung an die Zündeinrichtung gewährleistet.

Die Lösung dieser Aufgabe ist im Patentanspruch 1 definiert. Sie besteht darin, daß die Übermittlung der Informationssignale in Hin- und Rückrichtung durch die Auswerteeinrichtung gesteuert wird. Abhängig von dem von der Sensoreinrichtung gelieferten Aufprallsignal wird die Übermittlung der Informationssignale durch die Auswerteeinrichtung beendet. Damit ist das Übertragungsmedium zwischen Auswerteeinrichtung und Zündeinrichtung frei für ein möglicherweise folgendes Auslösesignal, sodaß durch das erfindungsgemäße Verfahren eine Verzögerung bei der Übertragung des Auslösesignals an die Zündeinrichtung verhindert wird.

Vorzugsweise wird die Übermittlung von Informationssignalen durch die Auswerteeinrichtung derart gesteuert, daß einer Übermittlung eines Informationssignals von der Zündeinrichtung an die Auswerteeinrichtung eine Übermittlung eines Informationssignals von der Auswerteeinrichtung an die Zündeinrichtung vorangeht. Durch das von der Auswerteeinrichtung gelieferte und eine Aufforderung zur Rückantwort enthaltende Informationssignal wird die Zündeinrichtung beispielsweise veranlaßt, Diagnosefunktionen auszuführen und den Widerstand des Zündelements, die über zumindest einen steuerbaren Schalter an dem Zündelement anliegende Zündspannung, die Funktionstüchtigkeit des steuerbaren Schalters oder auch den Zündkreis (Zündelement, steuerbarer Schalter) auf Leckwiderstände zu überprüfen. Die Meßergebnisse bzw. die ausgewerteten Meßergebnisse werden als codiertes Informationssignal an die Auswerteeinrichtung zurückgesendet. Auf die Aufforderung durch die Auswerteeinrichtung hin können auch sonstige ggf in einem Speicher der Zündeinrichtung zwischengespeicherte Zustandsdaten übertragen werden. Sobald nun aus dem Aufprallsignal zumindest eine geringe Wahrscheinlichkeit für das Auslösen eines oder mehrerer Rückhaltemittel ableitbar ist, wird das Übertragen von Informationssignalen an die Zündeinrichtung eingestellt. Damit kommt auch die Übertragung von Informationssignalen von der Zündeinrichtung an die Auswerteeinrichtung zum Erliegen.

Vorzugsweise wird das Aufprallsignal, das beispielsweise als gefiltertes, analoges Ausgangssignal eines Beschleunigungssensors an die Auswerteeinrichtung übermittelt wird, mit einem Schwellwert verglichen und bei Überschreiten des Schwellwerts durch das Aufprallsignal die Übermittlung der Informationssignale durch die Auswerteeinrichtung eingestellt. Gleichsam kann aber auch eine festgelegte Mindeststeigung im Aufprallsignal oder ein sonstiges Kriterium für das Einstellen der Übermittlung von Informationssignalen maßgebend sein. Der Zeitpunkt, zu dem die Übermittlung der Informationssignale eingestellt wird, kann gleich einem Startzeitpunkt für die algorithmische Auswertung des Aufprallsignals durch die Auswerteschaltung sein. Die Schwelle wird dabei so gewählt, daß leichte Fahrzeugerschütterungen und ähnliches nicht zu einer rechenintensiven algorithmischen Auswertung des Aufprallsignals führen.

Vorzugsweise wird nach einer festgelegten Zeitspanne ab dem Einstellen der Übermittlung von Informationsssignalen und gleichzeitigem Fehlen eines Auslösesignals während dieser Zeitspanne die Informationssignal-Übertragung wieder aufgenommen. Der Zeitpunkt kann beispielsweise auch durch Unterschreiten einer weiteren Schwelle durch das Aufprallsignal bestimmt sein.

Im übrigen kann sowohl der Zeitpunkt der Einstellung der Übertragung von Informationssignalen als auch der Zeitpunkt, an dem diese Maßnahme wieder aufgehoben wird, auch algorithmisch aus dem Aufprallsignal gewonnen werden.

Das Aufprallsignal ist ferner nicht zwingend als Sensorsignal eines einzigen Beschleunigungs- oder Crashsensors zu verstehen. Das Aufprallsignal kann beispielsweise ein vorverarbeitetes Crash- oder Beschleunigungssignal sein, das durch einfache oder mehrfache Integration und/oder Filterung gewonnen wird. Das Aufprallsignal kann ferner durch Sensorsignale mehrerer Sensoren bestimmt sein. In jedem Fall soll zu dem Zeitpunkt, zu dem die Übetragung von Informationssignalen abgebrochen wird, ein Auslösen des Rückhaltemittels als möglich erscheinen.

In einer weiteren vorteilhaften Weiterbildung wird das von Crashsensoren der Sensoreinrichtung gelieferte Signal in der Sensoreinrichtung selbst ausgewertet. Dabei liefert die Sensoreinrichtung ein codiertes Aufprallsignal an die Auswerteeinrichtung, auf das hin ein Auslösen des Rückhaltemittels eingeleitet werden soll. Beispiel dafür ist eine in einem Seitenteil des Fahrzeugs angeordnete Sensoreinrichtung zur Seitenaufprallerkennung, deren an die Auswerteeinirichtung geliefertes Aufprallsignal die Information enthält, daß ein erfolgter Seitenaufprall stark genug ist, um das Rückhaltemittel - z.B. einen Seiten- oder einen Kopfairbag - auszulösen. In der Auswerteeinrichtung wird dieses Aufprallsignal zusammen mit weiteren beispielsweise von einer Sitzbelegungserkennung oder einem Sensor zur Frontaufprallerkennung gelieferten Signalen verarbeitet. In Abhängigkeit von allen diesen Signalen wird das endgültige Auslösesignal an die dem Seitenairbag zugeordnete Zündeinrichtung übermittelt.

Bei einer solchen Weiterbildung der Erfindung wird die Übermittlung von Informationssignalen wiederum in Abhängigkeit vom Aufprallsignal eingestellt - nun aber, sobald von der Auswerteeinrichtung erkannt wird, daß das Aufprallsignal eintrifft, also bestenfalls zu dem Zeitpunkt, zu dem die erste Flanke des codierten Auslösesignals von der Auswerteinrichtung erkannt wird.

Weitere vorteilhafte Weiterbildungen der Erfindung sind in den Unteransprüchen gekennzeichnet.

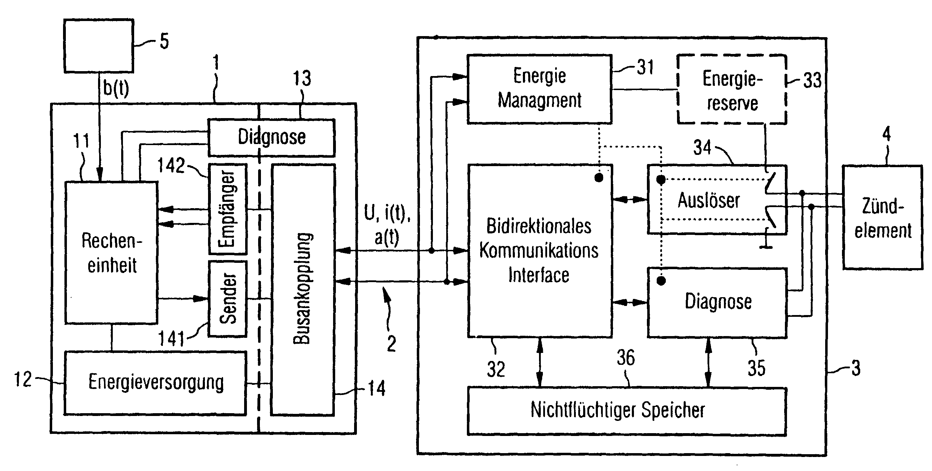

Die Erfindung und ihre Weiterbildungen werden anhand der einzigen Figur näher erläutert, die ein Blockschaltbild einer Anordnung zum Auslösen eines Rückhaltemittels in einem Fahrzeug zeigt, die nach dem erfindungsgemäßen Arbeitsverfahren betrieben wird.

Die Anordnung enthält eine Auswerteeinrichtung 1, die über eine Zweidraht-Leitung 2 mit einer Zündeinrichtung 3 elektrisch verbunden ist. Die Auswerteeinrichtung 1 enthält eine Recheneinheit 11, eine Diagnoseeinheit 13 eine Busankopplungseinheit 14, eine Empfangseinheit 142, eine Sendeeinheit 141 und eine Energieversorgungseinheit 12. Die Zündeinrichtung 3 enthält ein bidirektionales Kommunikationsinterface 32, eine Energiemanagement-Einheit 31, eine Energiereserve 33, einen Auslöser 34, eine Diagnoseeinheit 35, sowie einen nichtflüchtigen Speicher 36. Die Zündeinrichtung 3 ist elektrisch leitend mit einem Zündelement 4 verbunden. Die Auswerteeinrichtung 1 ist mit einer Sensoreinrichtung 5 elektrisch verbunden.

Die Energieversorgung 12 der Auswerteeinrichtung 1 versorgt die Recheneinheit 11 sowie sämtliche weiteren Funktionsblöcke der Auswerteeinrichtung 1 mit Energie. In der Recheneinheit 11 wird ein von der Sensoreinrichtung 5 zur Aufprallerkennung geliefertes Aufprallsignal b(t) ausgewertet. Zumindest die Recheneinheit 11 wird durch die Diagnoseeinheit 13 auf ihre Funktionsfähigkeit hin überprüft.

Durch die Recheneinheit 11 wird zudem der Datenaustausch zwischen der Auswerteeinheit 1 und der Zündeinrichtung 3 gesteuert. Dabei liefert die Auswerteeinheit 1 codierte Informationssignale i(t) und bei einem Auslösewunsch ein codiertes Auslösesignal a(t) additiv zu einem Gleichsignal U über die Leitung 2 an die Zündeinrichtung 3, wobei das Gleichsignal U während des Betriebs der Anordnung zur Energieversorgung der Zündeinrichtung 3 von der Auswerteeinrichtung 1 an die Zündeinrichtung 3 geliefert wird. Die Zündeinrichtung 3 kann jedoch auch über eine eigene Leitung von der Auswerteeinrichtung 1 oder direkt vom Bordnetz mit Energie versorgt werden, sodaß über die Leitung 2 nur Informations- und Auslösesignale i(t), a(t) übertragen werden.

In der Sende- bzw der Empfangseinheit 141 und 142 zusammen mit der Busankopplung 14 der Auswerteeinrichtung 1 werden Nachrichten in Form von Code-Wechselsignalen gesendet bzw empfangen. Das Auswerten von empfangenen Daten und das Zusammenstellen von auszusendenden Daten wird von der Recheneinheit 11 durch geführt, die damit nicht nur die Auswertung des von der Sensoreinrichtung 5 gelieferten Aufprallsignals b(t) übernimmt sondern auch als bidirektionales Kommunikationsinterface für höhere Schichten im Kommunikationsablauf zwischen Auswerteeinrichtung 1 und Zündeinrichtung 3 dient und vorzugsweise als Mikroprozessor ausgebildet ist.

Durch das bidirektionale Kommunikationsinterface 32 wird die Datenübertragung seitens der Zündeinrichtung 3 gesteuert. Das bidirektionale Kommunikationsinterface 32 enthält damit zugleich die Funktionalität der hardwarenahen Funktionsblöcke Busankopplung 14, Sender 141, Empfänger 142 und Recheneinheit 11 der Auswerteeinrichtung 1 bezüglich der Datenübertragung. Die empfangenen Informations- und Auswerteeignale i(t) und a(t) werden im bidirektionalen Kommunikationsinterface 32 ausgewertet und in Steuersignale umgesetzt.

Die Funktion Energiemanagement 31 koppelt das Gleichsignal U aus dem an die Zündeinrichtung 3 übertragenen Signal aus und betreibt damit diverse Schaltungskomponenten, insbesondere das bidirektionale Kommunikationsinterface 32. Durch das Energiemanagement 31 wird ferner eine Energiereserve 33 in Form eines Zündkondensators aufgeladen, aus der im Auslösefall das Zündelement 4 gezündet wird und ggf das bidirektionale Kommunikationsinterface 32 zumindest für kurze Zeit mit Energie versorgt wird, falls die Standard-Energiezufuhr unterbrochen ist oder gänzlich ausfällt.

Bei Empfang eines Auslösesignals a(t), das als solches von dem bidirektionalen Kommunikationsinterface 32 erkannt wird, wird durch das bidirektionalen Kommunikationsinterface 32 der Auslöser 34 in Form zumindest einen steuerebaren Schalters angesteuert, so daß die zum Zünden des Zündelements 4 notwendige Energie von der Energiereserve 33 an das Zündelement 4 übertragen wird.

Bei Empfang eines entsprechenden Informationssignals i(t) wird durch das bidirektionale Kommunikationsinterface 32 die Diagnoseeinheit 35 veranlaßt, Bestandteile und Bauelemente der Zündeinrichtung 3 auf ihre Funktionstüchtigkeit hin zu überprüfen. Die für Diagnose-, Auswerte-, und Übertragungsfunktionen notwendigen Verarbeitungsvorschriften sind in dem nichtflüchtigen Speicher 36 abgelegt.

## Patentansprüche

1. Verfahren zum Auslösen eines Rückhaltemittels in einem Fahrzeug,
bei dem ein von einer Sensoreinrichtung (5) geliefertes Aufprallsignal (b(t)) in einer Auswerteeinrichtung (1) ausgewertet wird,
bei dem codierte Informationssignale (i(t)) zwischen der Auswerteeinrichtung (1) und einer mit einem Zündelement (4) des Rückhaltemittels elektrisch verbundenen Zündeinrichtung (3) in beiden Richtungen übermittelt werden,
bei dem die Übermittlung der Informationssignale (i(t)) durch die Auswerteeinrichtung (1) gesteuert wird,
bei dem abhängig von dem Aufprallsignal (b(t)) die Übermittlung der Informationssignale (i(t)) beendet wird, und
bei dem abhängig von dem Aufprallsignal (b(t)) ein codiertes Auslösesignal (a(t)) zum Auslösen des Rückhaltemittels von der Auswerteeinrichtung (1) an die Zündeinrichtung (3) geliefert wird.

2. Verfahren nach Anspruch 1, bei dem die Übermittlung der Informationssignale (i(t)) beendet wird, sobald eine Schwelle durch das Aufprallsignal (b(t)) überschritten wird.

3. Verfahren nach Anspruch 1, bei dem das Aufprallsignal (b(t)) als Codesignal ausgebildet ist, und bei dem die Übermittlung der Informationssignale (i(t)) bei Eintreffen des Aufprallsignals (b(t)) in der Auswerteeinrichtung (1) beendet wird.

4. Verfahren nach Anspruch 1, bei dem die Übermittlung von Informationssignalen (i(t)) wieder aufgenommen wird, sobald eine festgelegte Zeitspanne ab Einstellung der Übermittlung von Informationssignalen (i(t)) abgelaufen ist und während dieser Zeitspanne kein Auslösesignal (a(t)) von der Auswerteeinrichtung (1) erzeugt wurde.

5. Verfahren nach Anspruch 1, bei dem die Zündeinrichtung (3) durch die Auswerteeinrichtung (1) mit einem an die Zündeinrichtung (3) übermittelten Informationssignal (i(t)) aufgefordert wird, ein Informationssignal (i(t)) an die Auswerteeinrichtung (1) zu senden.

6. Verfahren nach Anspruch 5, bei dem abhängig von dem Aufprallsignal (b(t)) die Übermittlung der Aufforderungen enthaltenden Informationssignale (i(t)) an die Zündeinrichtung (3) beendet wird.

7. Verfahren nach Anspruch 5, bei dem das von der Zündeinrichtung (3) an die Auswerteeinrichtung (1) gesendete Informationssignal (i(t)) eine Information über den Widerstand des Zündelements (4) enthält.

8. Verfahren nach Anspruch 5, bei dem das von der Zündeinrichtung (3) an die Auswerteeinrichtung (1) gesendete Informationssignal (i(t)) eine Information über die über zumindest einen steuerbaren Schalter an dem Zündelement (4) anliegende Zündspannung enthält.

9. Verfahren nach Anspruch 5, bei dem das von der Zündeinrichtung (3) an die Auswerteeinrichtung (1) gesendete Informationssignal (i(t)) eine Informationen über die Funktionstüchtigkeit zumindest eines mit dem Zündelement (4) in Serie angeordneten steuerbaren Schalters enthält.

10. Verfahren nach Anspruch 5, bei dem das von der Zündeinrichtung (3) an die Auswerteeinrichtung (1) gesendete Informationssignal (i(t)) eine Informationen über einen Leckwiderstand im Zündkreis enthält.

## Claims

1. Method for triggering a retention device in a vehicle
in which an impact signal (b(t)) sent by a sensor unit (5) is evaluated in an evaluation unit (1),
in which coded information signals (i(t)) are transmitted in both directions between the evaluation unit (1) and an igniter unit (3), the latter being electrically connected to an igniter element (4) of the retention device,
in which the transmission of the information signals (i(t)) is controlled by the evaluation unit (1),
in which the transmission of the information signals (i(t)) is stopped in dependence on the impact signal (b(t)), and
in which a coded triggering signal (a(t)) is sent by the evaluation unit (1) to the igniter unit (3) in dependence on the impact signal (b(t)) to trigger the retention device.

2. Method in accordance with Claim 1, in which the transmission of the information signals (i(t)) is discontinued when a threshold value is exceeded by the impact signal (b(t)).

3. Method in accordance with Claim 1, in which the impact signal (b(t)) is implemented as a coded signal, and in which the transmission of the information signals (i(t)) is discontinued when the impact signal (b(t)) arrives at the evaluation unit (1).

4. Method in accordance with Claim 1, in which the transmission of information signals (i(t)) is restarted as soon as a specified time interval commencing with the cessation of the transmission of information signals (i(t)) has expired, providing no triggering signal (a(t)) has been generated by the evaluation unit (1) during this time interval.

5. Method in accordance with Claim 1, in which the evaluation unit (1) requests the igniter unit (3), by means of an information signal (i(t)) sent to the igniter unit (3), to send an information signal (i(t)) to the evaluation unit (1).

6. Method in accordance with Claim 5, in which the transmission of the information signals (i(t)) containing the requests to the igniter unit (3) is discontinued in dependence on the impact signal (b(t)).

7. Method in accordance with Claim 5, in which the information signal (i(t)) sent from the igniter unit (3) to the evaluation unit (1) contains information on the resistance of the igniter element (4).

8. Method in accordance with Claim 5, in which the information signal (i(t)) sent by the igniter unit (3) to the evaluation unit (1) contains information on the igniting voltage applied to the igniter element (4) via at least one controllable switch.

9. Method in accordance with Claim 5, in which the information signal (i(t)) sent by the igniter unit (3) to the evaluation unit (1) contains information on the serviceability of at least one controllable switch connected in series with the igniter element (4).

10. Method in accordance with Claim 5, in which the information signal (i(t)) sent by the igniter unit (3) to the evaluation unit (1) contains information on a leakage resistance in the igniting circuit.

## Revendications

1. Procédé pour le déclenchement d'un moyen de retenue dans un véhicule,
dans lequel un signal de collision (b(t)) émis par un dispositif capteur (5) est analysé dans un dispositif d'analyse (1),
dans lequel des signaux d'information codés (i(t)) sont transmis dans les deux sens entre le dispositif d'analyse (1) et un dispositif d'allumage (3) connecté électriquement à un élément d'allumage (4) du moyen de retenue,
dans lequel la transmission des signaux d'information (i(t)) est commandée par le dispositif d'analyse (1),
dans lequel la transmission des signaux d'information (i(t)) est interrompue en fonction du signal de collision (b(t), et
dans lequel un signal de déclenchement codé (a(t)) pour le déclenchement du moyen de retenue est transmis du dispositif d'analyse (1) au dispositif d'allumage (3) en fonction du signal de collision (b(t)).

2. Procédé selon la revendication 1, dans lequel la transmission des signaux d'information (i(t)) est interrompue dès que le signal de collision (b(t)) devient supérieur à un seuil.

3. Procédé selon la revendication 1, dans lequel le signal de collision (b(t)) est constitué par un signal de code et dans lequel la transmission des signaux d'information (i(t)) est interrompue au moment de l'arrivée du signal de collision (b(t)) dans le dispositif d'analyse (1).

4. Procédé selon la revendication 1, dans lequel la transmission des signaux d'information (i(t)) est reprise dès qu'un laps de temps fixé s'est écoulé à partir de l'établissement de la transmission des signaux d'information (i(t)) et si aucun signal de déclenchement (a(t)) n'a été produit par le dispositif d'analyse (1) pendant ce laps de temps.

5. Procédé selon la revendication 1, dans lequel le dispositif d'allumage (3) est sollicité par le dispositif d'analyse (1) avec un signal d'information (i(t)) transmis au dispositif d'allumage (3), d'envoyer un signal d'information (i(t)) au dispositif d'analyse (1).

6. Procédé selon la revendication 5, dans lequel la transmission au dispositif d'allumage (3) de signaux d'information (i(t)) contenant des sollicitations est interrompue en fonction du signal de collision (b(t)).

7. Procédé selon la revendication 5, dans lequel le signal d'information (i(t)) transmis au dispositif d'analyse (1) par le dispositif d'allumage (3) renferme une information sur la résistance de l'élément d'allumage (4).

8. Procédé selon la revendication 5, dans lequel le signal d'information (i(t)) transmis au dispositif d'analyse (1) par le dispositif d'allumage (3) contient une information sur la tension d'allumage appliquée à l'élément d'allumage (4) par l'intermédiaire d'au moins un interrupteur pouvant être commandé.

9. Procédé selon la revendication 5, dans lequel le signal d'information (i(t)) transmis au dispositif d'analyse (1) par le dispositif d'allumage (3) contient une information sur l'aptitude au fonctionnement d'au moins un interrupteur pouvant être commandé qui est monté en série avec l'élément d'allumage (4).

10. Procédé selon la revendication 5, dans lequel le signal d'information (i(t)) transmis au dispositif d'analyse (1) par le dispositif d'allumage (3) contient une information sur une résistance de fuite dans le circuit d'allumage.
